# EUROPEAN PATENT SPECIFICATION

(11) **EP 4 041 457 B1**
(45) Date of publication and mention of the grant of the patent: **28.01.2026**
(21) Application number: 20800730.2
(22) Date of filing: 07.10.2020
(51) Int. Cl.: B02C 19/06, B02C 23/08, B02C 23/14, B04C 5/15, B04C 5/185, B24C 9/00

(54) **APPARATUS TO RECOVER INCOHERENT MATERIAL PRESENT IN A PROCESS FLUID, AND CORRESPONDING METHOD**
VORRICHTUNG ZUR RÜCKGEWINNUNG VON INKOHÄRENTEM MATERIAL IN EINER PROZESSFLÜSSIGKEIT UND ENTSPRECHENDES VERFAHREN
APPAREIL POUR RÉCUPÉRER UN MATÉRIAU INCOHÉRENT PRÉSENT DANS UN FLUIDE DE PROCESSUS, ET PROCÉDÉ CORRESPONDANT

(30) Priority: 07.10.2019 IT 201900018140
(43) Date of publication of application: 17.08.2022
(73) Proprietor: I.M.M.M.E.S. S.r.l., 30010 Campagna Lupia (IT)
(72) Inventor: COMBERLATO, Giuseppe, 30010 Camponogara (IT); VETTORATO, Giulio, 30010 Camponogara (IT)
(74) Representative: Petraz, Davide Luigi
(86) International application number: PCT/IT2020/050248
(87) International publication number: WO 2021/070210

(56) References cited:
- DE-A1- 2 523 471
- IT-A1- UB20 154 174
- US-A1- 2006 207 927
- US-B2- 9 914 132

## Description

### FIELD OF THE INVENTION

The present invention concerns an apparatus to recover incoherent material present in a process fluid. The process fluid can derive from industrial operations that use, for example, water or similar liquids, to perform certain processes, such as, for example but not only, waterjet cutting, and that produce as a waste product the process fluid itself, mixed with incoherent material such as, for example particulate matter, granules, inert material, abrasive substances or suchlike.

The present invention also concerns a method to recover incoherent material present in a process fluid, as well as a cutting machine which uses the apparatus as above.

### BACKGROUND OF THE INVENTION

Industrial processes are known in which water, or similar process fluid, is used as an operative mean to carry out certain processes which entail the dispersion of incoherent material in the process fluid.

In particular, industrial machines are known for the waterjet cutting of various materials at extremely high pressure.

Waterjet technology is a cutting process performed cold, which uses a jet of pure water or an abrasive jet of water.

The jet of pure water is used in applications to cut, in a natural way and without using abrasives, "soft" materials such as gaskets, polystyrene, plastic, paper, wood, insulating materials, concrete slabs, carpets, hides, leather, food products, etc.

The abrasive jet of water is similar to the jet of pure water but, after creating the jet of pure water, incoherent substances are inserted into the cutting head of the cutting machine, in particular abrasives (such as siliceous sands), which, mixed with the water, increase the cutting power and produce a jet able to cut "hard" materials such as metals, ceramics, stone, glass and composite materials.

In this case, incoherent materials such as particles and/or debris and/or solid residues (particulate) of the abrasive type are generated as waste material.

One disadvantage of water cutting concerns the disposal or possible recovery of the incoherent material generated by processing.

The disposal of the abrasive material represents a particularly important problem, since periodic operations are required to empty the collection tank where the process fluid normally collects. In addition to the discharge of water from the collection tank, the periodic maintenance operations also comprise the manual or mechanical extraction of the incoherent material generated. The latter can be accumulated in bins, big-bags, or other locations awaiting transport and transfer to landfills or recovery centers, which are not always located near the places where the incoherent material is generated. This procedure entails a considerable cost for companies, as well as the frequent transport of incoherent material, with the consequent environmental problems.

Mechanical systems are known to dispose of or recover the incoherent material generated and present in the collection tank. However, such systems are typically subject to wear, which entails high maintenance costs and a limited useful life. In particular, one component that is typically subject to wear is the pumping system for the process fluid containing the incoherent material. In general, in order to pump the fluid, known recovery systems use a centrifugal pump on which a filter is applied to retain part of the incoherent material, so as to prevent said material from coming into contact with the pump components. Disadvantageously, this solution does not allow to retain all the abrasive material, and the continuous contact of the material with the impeller of the pump and/or with the various components which ensure its hydraulic seal causes frequent problems of wear on the parts mentioned above.

This solution is described for example in IT UB20154174.

Other known solutions, for example the one described in US 2006/207927, provide to use centrifugal pumps that do not have hydraulic sealing elements, in which part of the process fluid can escape from the pump body to be collected in a chamber outside the pump. This solution is particularly disadvantageous in that in any case the process fluid, and consequently the incoherent material, comes into contact at least with the impeller of the pump. Furthermore, by depriving the pump of the sealing elements, significant reductions in efficiency are caused. Another disadvantage of the known solution as above is that it requires another recovery system, suitable to recover the process fluid which has flowed into the chamber outside the pump, making this solution particularly expensive.

Moreover, DE 25 23 471 A1 describes a processing plant for use with loose or bulk materials.

Furthermore, the need is known to recover the process fluid that has been purified of the incoherent material in order to facilitate the natural discharge operations thereof, or to reintegrate it into the processing cycle, for example in waterjet cutting, or to reuse it in other mechanical processes in order to reduce waste and optimize available resources.

Another need is to be able to make the recovered incoherent material reusable "on site".

There is therefore a need to implement and/or perfect an apparatus to recover incoherent material present in a process fluid which can overcome at least one of the disadvantages of the state of the art.

In particular, one purpose of the present invention is to provide an apparatus to recover incoherent material that allows to separate the incoherent material from the process fluid in order to recover at least part of the latter.

Another purpose is to provide an apparatus to recover incoherent material that allows to reuse at least part of the latter in industrial processing operations.

Another purpose of the present invention is to provide an apparatus to recover incoherent material that allows it to be installed "on site", that is, directly associated with one or more processing machines.

Another purpose of the present invention is to provide an apparatus to recover incoherent material present in a process fluid that allows to reduce the maintenance or cleaning interventions on the apparatus, automating the steps of recycling, recovering and pumping the process fluid.

Another purpose of the present invention is, consequently, to provide an apparatus to recover incoherent material that allows the incoherent material recovered to be taken to a landfill or to specialized plants for its reuse, reducing the overall costs of its disposal.

Another purpose of the present invention is to perfect a method to recover incoherent material that is effective and that allows to automate the steps of recycling, recovering and pumping the process fluid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the present invention concerns an apparatus to recover incoherent material present in a process fluid deriving from industrial operations performed in at least one user machine, for example an abrasive water cutting machine.

According to the invention, the recovery apparatus comprises a separation device configured to separate the incoherent material from the process fluid by means of centrifugal action.

In a preferential solution, the separation device is of the cyclone type.

According to one aspect of the invention, the separation device is provided at least with one entrance for the process fluid to be treated, advantageously tangent with respect to the oblong development of the separation device, and at least one exit to discharge the incoherent material disposed along the separation device and downstream of the entrance.

According to one aspect of the invention, the recovery apparatus comprises a pumping unit configured to remove the process fluid from a removal zone and send it to the entrance of the separation device.

Advantageously, the separation device allows to substantially obtain a complete removal of the incoherent material from the process fluid, for example water.

In this way, there is a reduction in the costs relating to the extraction, separation, recovery, reuse and/or landfilling of the incoherent material present in the process fluid to be treated and, moreover, the treated process fluid, that is, purified of the incoherent material, can be easily recovered.

The apparatus of the present invention also comprises a selection device, downstream of the separation device, configured to select the incoherent material separated from the process fluid on the basis of its granulometry. In particular, the selection device allows to separate at least a fine portion and a large portion of such incoherent material, which are then sent to respective collection elements.

The apparatus also comprises a drying device configured to dry at least part of the incoherent material selected.

Advantageously, the recovery apparatus as above allows to obtain a reduced bulk, minimum pressure drops and a high flow rate of the process fluid to be treated, and is able to be used "on site", that is, directly associated with one or more working and fluid jet cutting machines. In other words, the apparatus of the present invention can be advantageously supplied, or mounted, on board one or more abrasive fluid jet machines.

The present invention also concerns a cutting machine that uses a jet of process fluid provided with a tank to collect the process fluid containing at least a process fluid mixed with incoherent material produced during the cutting, and with an apparatus to recover incoherent material as described above, wherein the process fluid is water.

Advantageously, such apparatus to recover incoherent material allows to perfect the waterjet cutting machine as above, allowing to recover the incoherent material produced during the cutting and, therefore, to reuse the water used in the cutting, both in the case of a "pure" water jet and also in the case of an abrasive jet with water mixed with abrasive incoherent material.

The present invention also concerns a method to recover incoherent material present in a process fluid.

According to the present invention, the method provides to:
- remove the process fluid containing at least process fluid mixed with incoherent material from a collection zone;
- separate, in a separation device, the incoherent material present in the process fluid to be treated from the process fluid itself;
- recover the incoherent material separated from the process fluid;
- recover the process fluid purified of the incoherent material;
- select, on the basis of the granulometry, the recovered incoherent material in order to recover at least a large portion and a fine portion thereof;
- drying at least part of the incoherent material selected.

Such method allows to optimize the energy resources available for a process by recovering the process fluid, once it has been purified of the incoherent material, and reusing at least part of the incoherent material once it has been separated from the process fluid. Such method, therefore, is particularly advantageous from the perspective of both the efficiency of the plant to which it will be applied and also of cost effectiveness.

According to one embodiment, the recovery of incoherent material provides to collect the selected portions of incoherent material separated from the process fluid in respective collection elements.

According to another embodiment, the method comprises dehydrating the fine portion of the incoherent material, that is, removing the residual process fluid by means of recovering and accumulating such fine portion of the incoherent material in a first collection element having draining characteristics.

Advantageously, using collection elements allows to speed up and facilitate the operations of disposal and/or reuse of the recovered incoherent material, and the drying thereof allows to preserve, transport and adequately store the incoherent material pending its landfilling or other intended use.

### ILLUSTRATION OF THE DRAWINGS

These and other characteristics of the present invention will become apparent from the following description of some embodiments, given as a non-restrictive example with reference to the attached drawings wherein:
- figs. 1 and 2 show schematic and perspective views of an embodiment of a recovery apparatus not falling under the scope of the present invention
- fig. 3 is a schematic view of a respective embodiment of a recovery apparatus in accordance with the present invention;
- fig. 4 is a perspective view of the embodiment of the apparatus of figure 3

To facilitate comprehension, the same reference numbers have been used, where possible, to identify identical common elements in the drawings.

### DESCRIPTION OF EMBODIMENTS

We will now refer in detail to the various embodiments of the invention, of which one examples is shown in the attached drawings.

Some embodiments described here with reference to the attached drawings concern an apparatus 10 to recover incoherent material M present in a process fluid F.

According to a preferred embodiment, the recovery apparatus 10 is directly associated with one or more "cold" cutting machines, in particular with machines that use an abrasive water jet.

However, we do not exclude applying the recovery apparatus 10 on any other working machine whatsoever that provides to use, produce and/or eliminate process fluid F mixed with incoherent material M.

By incoherent material M, here and in the present description we mean inert material, for example abrasive, of different granulometries which is suspended or immersed in a process fluid F, for example, but not limited to, water, following industrial processes.

In particular, by incoherent material M we mean both the material originating from pure waterjet cutting of materials such as cement or suchlike, such as for example, but not limited to, solid particles, debris, or residues (particulate matter), and also abrasive material contained in an abrasive water jet such as, but not limited to, abrasive silica sand and material released when cutting hard materials such as metals or suchlike.

In particular, such incoherent material M is recovered and collected together with the process fluid F in a collection zone 11.

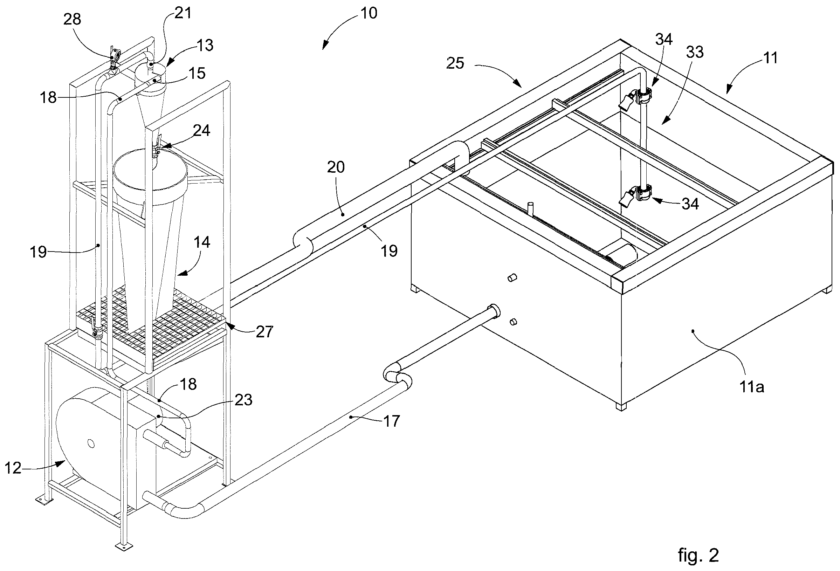

In the case of waterjet cutting, as shown by way of example in fig. 2, the collection zone 11 can be a collection tank 11a generally provided under, and in correspondence with, a waterjet cutting machine (not shown).

By process fluid F we generally mean, here and hereafter in the description, water, aqueous mixtures, pure water, water with suitable additives or similar or comparable fluids.

According to the present invention, the recovery apparatus 10 comprises a separation device 13 configured to separate, by means of centrifugal action, the incoherent material M from the process fluid F.

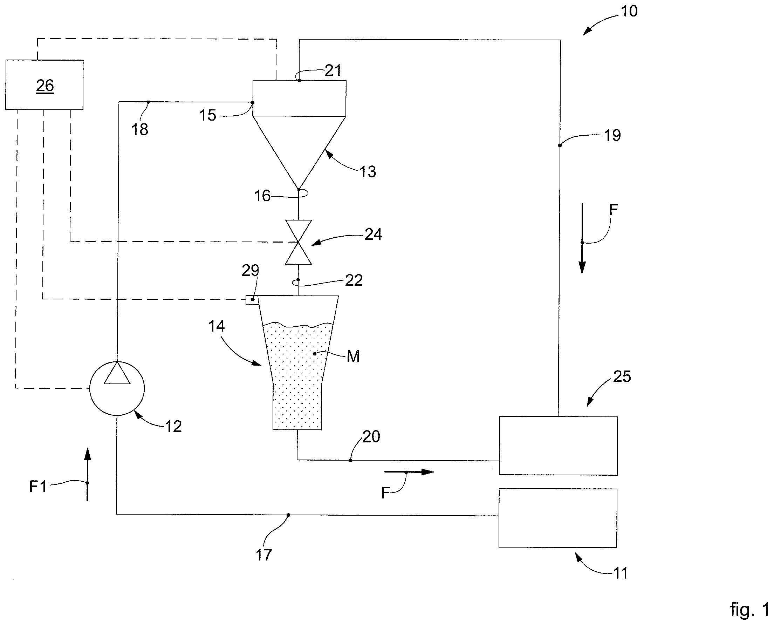

In the specific case shown by way of example in figs. 1-4, the separation device 13 is of the cyclone or hydrocyclone type.

In particular, the separation device 13 is provided with at least one entrance 15 for the process fluid to be treated F1, provided in this case tangential with respect to the separation device 13.

By process fluid to be treated F1 we mean, here and hereafter in the description, the process fluid F mixed with incoherent material M.

According to one embodiment in accordance with the present invention, the separation device 13 is also provided with at least one exit 16 to discharge the incoherent material M, provided along the oblong development of the separation device 13 and downstream of the entrance 15 as above.

In particular, the discharge exit 16 is provided coaxial to the oblong development of the separation device 13.

According to the present invention, the recovery apparatus 10 comprises a pumping unit 12 configured to remove the process fluid to be treated F1 from a collection zone 11 and send it to the entrance 15 of the separation device 13.

Advantageously, the tangential entrance 15, together with the thrusting action of the pumping unit 12, promotes the generation of the spiral motion inside the separation device 13. The high peripheral speed imparted, in a progressively increasing manner, to the fluid to be treated inside the separation device 13 creates a controlled vorticity such as to project the incoherent material M in suspension toward the external wall, exploiting the centrifugal force which generates a spiral-shaped flow in a downward direction toward the discharge exit 16. Consequently, the incoherent material M, since it has a greater inertia than the process fluid F (typically water), is thrust against the external walls and falls to the bottom of the separation device 13.

According to some embodiments, the separation device 13 is made of stainless steel. Advantageously, the stainless steel material allows a high resistance to abrasion following contact with the incoherent material M of an abrasive nature, and to oxidation following contact with the process fluid, for example water.

With reference to figs. 1-4, the separation device 13 has a cylindrical portion in which the tangential entrance 15 of the process fluid to be treated F1 is provided, and a conical portion associated at the lower part with the cylindrical portion and in communication with the latter. In the conical portion there is provided the exit 16 to discharge the separated incoherent material M. This conical portion substantially acts as a hopper to recover the recovered incoherent material M.

According to one embodiment, the separation device 13 is also provided with an exit 21 to recirculate the treated process fluid F, the recirculation exit 21 being provided on the side opposite the discharge exit 16 and transverse with respect to the entrance 15.

Advantageously, the centrifugal force generated inside the separation device 13 is such as to thrust the process fluid F, once treated, upward, that is, toward the recirculation exit 21.

By treated process fluid F we mean, here and hereafter in the description, process fluid F substantially without any incoherent material M, that is, without any solid substances whatsoever with different granulometries dispersed in the fluid itself.

With reference to the drawings, this recirculation exit 21 is provided in the cylindrical portion of the separation device 13.

In particular, the recirculation pipe 19 connects the recirculation exit 21 with a destination zone 25 of the treated process fluid F, in order to recover such fluid. The treated and recovered process fluid F can be reused in subsequent industrial workings, or it can be discharged in a natural manner.

The destination zone 25 can be a waterjet cutting machine, or a water cooling system, an accumulation tank, plants or systems for industrial working, or discharge plants or systems.

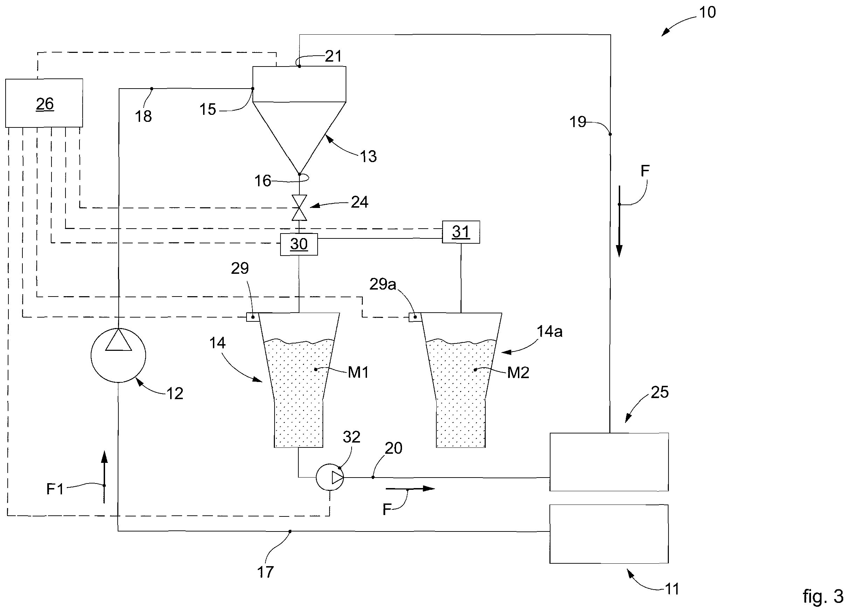

With reference to figs. 1 and 3, the destination zone 25 can coincide with the collection zone 11, substantially producing a closed circuit for the recovery of the process fluid F. For example, the collection zone 11 can be a collection tank 11a of a waterjet cutting machine in which, during the cutting, the water released for the jet cutting itself accumulates.

According to further embodiments, the treated process fluid F can be sent to a fluidization unit 33 consisting of a series of ejectors 34 to amplify the flow rate. In particular, such ejectors 34 can be disposed in the collection zone 11 so as to force the process fluid F1 to be treated toward the suction pipe 17. Advantageously, this conformation also allows to force the possible incoherent material M, which is deposited for example on the bottom of a collection tank 11a, toward the suction pipe 17 of the apparatus 10.

A recovery apparatus 10 is thus obtained which is able to continuously recycle the process fluid F, reducing energy consumption, for example relating to the use of a waterjet cutting machine, minimizing its maintenance or cleaning operations.

In addition, the fluid dynamic characteristics of the recovery apparatus 10 are such as to minimize the pressure drops and to obtain a high flow rate of the treated process fluid F.

With reference to the attached drawings, the pumping unit 12 is connected, through a suction pipe 17, to the collection zone 11 in which the process fluid to be treated F1 is located.

In particular, the pumping unit 12 is connected, through a delivery pipe 18, to the entrance 15 of the separation device 13.

In a preferred embodiment, the pumping unit 12 is an anti-wear pump, in particular a peristaltic pump, which allows to prevent contact between the process fluid to be treated F1, containing the incoherent material M, and the components of the pump itself.

The peristaltic pump advantageously allows to transfer the process fluid to be treated F1 containing incoherent, in particular abrasive, material M without it coming into direct contact with the internal components of the pumping unit 12, preventing premature wear of the pumping unit 12 and a consequent frequent and expensive maintenance thereof. However, other types of pumps are not excluded.

As shown by way of example in the attached drawings, the pumping unit 12 can be driven by a motor 23.

The motor 23 can be for example an electric motor or an endothermic motor.

According to one embodiment, the recovery apparatus 10 comprises one or more elements 14, 14a to collect the incoherent material M downstream of the discharge exit 16.

In particular, a first collection element 14 can be configured to drain the process fluid F, through suitable meshes, and retain the incoherent material M inside it. For example, the first collection element 14 can be a draining bag. In this way, the first collection element 14 retains the incoherent material M that has been separated, recovered and discharged by the separation device 13, and allows to dehydrate the incoherent material M itself, draining the residual process fluid F, in particular water, through its meshes.

According to one embodiment, the first collection element 14, once filled and once the incoherent material M has been dehydrated, can be replaced with a new empty first collection element 14, either manually or automatically. This solution facilitates landfilling of the recovered incoherent material M or its transport to other destinations of use.

According to one embodiment, the recovery apparatus 10 comprises a drain pipe 20 associated with the first collection element 14, on the side opposite the discharge exit 16, to channel and recover the process fluid F which flows by gravity through the second collection element 14a itself.

According to one embodiment, the recovery apparatus 10 comprises a conveyor element 27 configured to recover the process fluid F drained by the first collection element 14 and convey it into the drain pipe 20. This conveyor element 27 can have a grid-shaped conformation from the side in contact with the first collection element 14, so as to make the drained process fluid F flow into the conveyor element 27 itself.

In particular, the drain pipe 20 is configured to introduce the process fluid F drained through the first collection element 14 into the destination zone 25 of the process fluid F. With reference, by way of example, to the attached drawings, the drain pipe 20 can introduce the process fluid F drained by the first collection element 14 into the destination zone 25, exploiting the slope of the drain pipe 20 itself and, therefore, gravity.

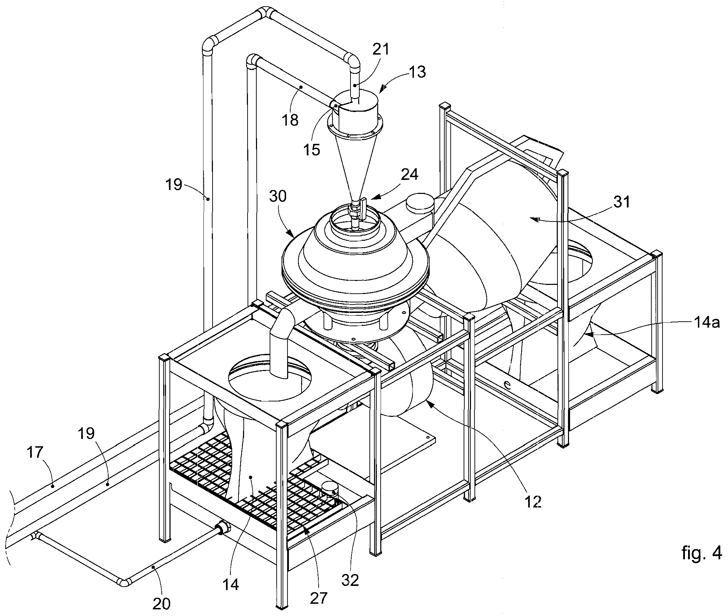

According to one possible variant, with reference to fig. 4, the drain pipe 20 can introduce the process fluid F, drained by the collection element 14, into the destination zone 25 with the aid of a pump 32.

With reference to figs. 3 and 4, the recovery apparatus 10 comprises a selection device 30 downstream of the discharge exit 16. The selection device 30 is configured to select the incoherent material M exiting from the separation device 13 on the basis of the granulometry thereof. Such selection device 30 can preferentially have at least two stages, thus allowing to select a large portion M1 of the incoherent material M having an average granulometry greater than that of a fine portion M2 complementary thereto.

Two or more elements, first 14 and second 14a, to collect the incoherent material M are disposed downstream of the selection device 30. In this specific case, the second collection element 14a is intended to collect the large portion M1, having a larger granulometry, of the incoherent material M exiting the selection device 30. The first collection element 14 can instead be intended to collect the fine portion M2, having a smaller granulometry, of the incoherent material M exiting the selection device 30.

The recovery apparatus 10 comprises a drying device 31, interposed between the selection device 30 and the second collection element 14a. The drying device 31 allows to dry the large portion M1 of incoherent material M, that is, the one having a higher average granulometry, before collecting it in the second collection element 14a. In this way, the large portion M1 is immediately recoverable and reusable, making the recovery apparatus 10 of the present invention particularly advantageous. In fact, once filled, the second collection element 14a can be replaced, manually or automatically, with a new empty second collection element 14a. The large portion M1 of incoherent material M thus selected can be recovered for further industrial processing operations (for example, abrasive waterjet cutting).

Instead, the fine portion M2 of incoherent material M exiting from the selection device 30 and collected in the first collection element 14 can be dehydrated as described previously, thus facilitating its landfilling.

In some embodiments, with reference to fig. 1, the recovery apparatus 10 comprises a discharge pipe 22 associated on one side with the discharge exit 16 of the separation device 13, and on the other with a collection element 14, 14a in order to discharge the incoherent material M inside it.

In other embodiments, the discharge pipe 22 is associated on one side with the discharge exit 16 of the separation device 13, and on the other with the selection device 30 in order to discharge the incoherent material M inside it.

According to some embodiments, the recovery apparatus 10 comprises at least one discharge valve 24 disposed downstream of the discharge exit 16.

In one embodiment, the discharge valve 24 can be mounted on the discharge pipe 22 in order to regulate the outflow of incoherent material M from the discharge exit 16. The discharge valve 24 can be a timed discharge valve so as to be open for a period of time that is adequate to let the right amount of incoherent material M fall into the one or more collection elements 14, 14a and/or into the selection device 30.

In particular, the discharge valve 24 can be a pneumatically driven timed discharge valve. Thanks to the presence of the timed discharge valve 24, an automatic recovery of the incoherent material M is obtained, preventing periodic maintenance and cleaning interventions and thus accelerating the recovery times of the abrasive material and of the treated process fluid F.

According to one embodiment, the recovery apparatus 10 comprises a control unit 26 configured to manage the functioning of the separation device 13, of the pumping unit 12, of the discharge valve 24, of the selection device 30 and of the drying device 31 as a function of the type and size of the incoherent material M to be recovered, the degree of recovery to be obtained and the type of process fluid F.

In particular, the control unit 26 can be configured to control and command the motor 23 of the pumping unit 12.

According to one embodiment, the control unit 26 can be configured to detect the filling of the collection elements 14, 14a by means of one or more sensors 29, 29a and to signal the need to replace them by means of sound and/or visual signals.

Such sensors 29, 29a can be weight sensors, as shown by way of example in fig. 2 or 4, or optical sensors.

According to one embodiment, the control unit 26 can be configured to regulate the timer associated with the discharge valve 24 as a function of the type of incoherent material M, the sizes of the collection elements 14, 14a and the time required to dehydrate the incoherent material M.

According to one embodiment, the control unit 26 is configured to close the discharge valve 24 in case of replacement of the collection elements 14, 14a.

According to one embodiment, the control unit 26 is configured to control and command the pumping unit 12 as a function of the desired entrance pressure and speed of the fluid to be treated F1 in the entrance 15 of the separation device 13, for example , but not limited to, by means of pressure detection means 28.

The present invention also concerns a method to recover incoherent material M present in a process fluid to be treated F1, which provides to:
- remove, from a collection zone 11, the process fluid to be treated F1 containing a process fluid F and the incoherent material M;
- separate, by means of centrifugal action in a separation device 13, the incoherent material M from the process fluid F itself;
- select the recovered incoherent material M in order to recover at least a large portion M1 and a fine portion M2 thereof, based on the granulometry;
- recover the incoherent material M separated from the process fluid F;
- recover the process fluid F purified of the incoherent material M.

In preferred embodiments, the removal of the process fluid F1 occurs through a pumping unit 12 comprising an anti-wear pump, for example a peristaltic pump. However, other types of pumps are not excluded.

According to further embodiments, the method provides to at least partly dry at least one of the selected portions M1, M2 of incoherent material M.

According to some embodiments, the recovery of incoherent material M provides to release and collect, at regular time intervals, the incoherent material M separated from the process fluid F, and possibly selected and dried, in at least one collection element 14, 14a.

The method can also comprise dehydrating the fine portion M1 of the incoherent material M, that is, removing the residual process fluid F, by recovering and accumulating the fine portion M1 in a collection element 14, 14a having draining characteristics.

It is clear that modifications and/or additions of parts or steps may be made to the apparatus 10 to recover incoherent material M present in a process fluid F and to the corresponding recovery method as described heretofore, without departing from the field and scope of the present invention.

It is also clear that, although the present invention has been described with reference to some specific examples, a person of skill in the art shall certainly be able to achieve many other equivalent forms of recovery apparatus 10 and corresponding recovery method, having the characteristics as set forth in the claims and hence all coming within the field of protection defined thereby.

## Claims

1. Apparatus to recover incoherent material (M) present in a process fluid (F) deriving from industrial operations performed in at least one user machine, comprising:
- a separation device (13) configured to separate the incoherent material (M) from the process fluid (F), said separation device (13) being provided at least with one entrance (15) for the process fluid to be treated (F1) provided tangent with respect to said separation device (13) and at least one exit (16) to discharge the incoherent material (M) provided along the oblong development of said separation device (13) and downstream of said entrance (15);
- a pumping unit (12) configured to remove the process fluid to be treated (F1) from a collection zone (11) of said user machine and send it to said entrance (15) of the separation device (13),
**characterized in that** it comprises: a selection device (30) disposed downstream of said discharge exit (16), said selection device (30) being configured to select, on the basis of the granulometry; at least a fine portion (M1) and a large portion (M2) of said incoherent material (M), at least one first collection element (14) configured to receive said fine portion (M1) and a second collection element (14a) configured to receive said large portion (M2); and a drying device (31) disposed downstream of said selection device (30) and upstream of said second collection element (14a), said drying device (31) being configured to at least partly dry at least said large portion (M1) of said incoherent material (M).

2. Recovery apparatus as in claim 1, **characterized in that** said pumping unit (12) comprises an anti-wear pump, in particular a peristaltic pump.

3. Recovery apparatus as in any claim hereinbefore, **characterized in that** said separation device is of the cyclone type.

4. Recovery apparatus as in any claim hereinbefore, **characterized in that** said separation device (13) is also provided with an exit (21) to recirculate the process fluid (F) treated, that is, substantially free of incoherent material (M), said recirculation exit (21) being provided on the side opposite said discharge exit (16) and transverse with respect to said entrance (15).

5. Recovery apparatus as in claim 4 and in which said pumping unit (12) is connected, by means of a suction pipe (17), to the collection zone (11) where the process fluid to be treated (F1) is located, **characterized in that** said recirculation exit (21) is fluidically connected to a recirculation pipe (19) able to supply at least part of said treated process fluid (F) to a fluidization unit (33) disposed in said collection zone (11) and configured to force said process fluid to be treated (F1) toward said suction pipe (17).

6. Recovery apparatus as in any claim hereinbefore, **characterized in that** said first collection element (14) is configured to release the residual process fluid (F), discharged together with said fine portion (M1) of the incoherent material (M), and retain said fine portion (M1) inside it.

7. Recovery apparatus as in any claim hereinbefore, **characterized in that** it comprises a drain pipe (20) associated with said first collection element (14), on the side opposite the discharge exit (16), to channel and recover the residual process fluid (F) which is released by gravity through said first collection element (14), said drain pipe (20) being configured to transfer said drained residual process fluid (F) through said first collection element (14) into a destination zone (25) of the process fluid (F) itself.

8. Recovery apparatus as in any claim hereinbefore, **characterized in that** it comprises a discharge valve (24) disposed downstream of said discharge exit (16) to selectively open said discharge exit (16) in order to release the recovered incoherent material (M), said discharge valve (24) being a timed discharge valve.

9. Recovery apparatus as in claim 8, **characterized in that** it comprises a control unit (26) configured to manage the functioning of said separation device (13), of said pumping unit (12) and of said discharge valve (24) as a function of the type and sizes of the incoherent material (M) to be recovered, of the degree of recovery to be obtained and of the type of process fluid (F).

10. Cutting machine using a jet of process fluid (F) provided with a tank (11a) to collect the process fluid to be treated (F1) containing at least process fluid (F) mixed with incoherent material (M), and with an apparatus (10) to recover incoherent material (M) as in any claim hereinbefore, wherein said process fluid (F) is water.

11. Method to recover incoherent material (M) present in a process fluid to be treated (F1), which provides to:
- remove the process fluid to be treated (F1) containing at least process fluid (F) and said incoherent material (M) from a collection zone (11);
- separate the incoherent material (M) from the process fluid (F) itself in a separation device (13);
- recover the incoherent material (M) separated from the process fluid (F);
- recover the process fluid (F) purified of the incoherent material (M);
- select, on the basis of the granulometry, said recovered incoherent material (M) in order to recover at least a large portion (M1) and a fine portion (M2) thereof;
- at least partly dry at least one of said portions (M1, M2) of incoherent material (M) which have been selected.

12. Method as in claim 11, **characterized in that** the recovery of incoherent material (M) provides to release and collect, at regular time intervals, at least part of the incoherent material (M) separated from the process fluid (F), and possibly selected and dried, in at least one collection element (14, 14a).

13. Method as in claim 11 or 12, **characterized in that** it provides to dehydrate said fine portion (M1) of the incoherent material (M), that is, to remove the residual process fluid (F) by recovering and accumulating said fine portion (M1) of the incoherent material (M) in at least one collection element (14, 14a) having draining characteristics.

## Patentansprüche

1. Gerät zum Rückgewinnen von inkohärentem Material (M), das in einem Prozessfluid (F) vorhanden ist, das von industriellen Vorgängen stammt, die in mindestens einer Benutzermaschine durchgeführt werden, umfassend:
- eine Trennvorrichtung (13), die dazu konfiguriert ist, das inkohärente Material (M) von dem Prozessfluid (F) abzutrennen, wobei die Trennvorrichtung (13) mit mindestens einem Eingang (15) für das zu behandelnde Prozessfluid (F1) bereitgestellt ist, der tangential in Bezug auf die Trennvorrichtung (13) bereitgestellt ist, und mit mindestens einem Ausgang (16) zum Abführen des inkohärenten Materials (M), der entlang der länglichen Entwicklung der Trennvorrichtung (13) und stromabwärts des Eingangs (15) bereitgestellt ist;
- eine Pumpeinheit (12), die dazu konfiguriert ist, das zu behandelnde Prozessfluid (F1) aus einer Sammelzone (11) der Benutzermaschine zu entnehmen und es zu dem Eingang (15) der Trennvorrichtung (13) zu leiten,
**dadurch gekennzeichnet, dass** es Folgendes umfasst: eine Auswahlvorrichtung (30), die stromabwärts des Abführungsausgangs (16) angeordnet ist, wobei die Auswahlvorrichtung (30) dazu konfiguriert ist, basierend auf der Granulometrie mindestens einen feinen Abschnitt (M1) und einen großen Abschnitt (M2) des inkohärenten Materials (M) auszuwählen, mindestens ein erstes Sammelelement (14), das zum Aufnehmen des feinen Abschnitts (M1) konfiguriert ist, und ein zweites Sammelelement (14a), das zum Aufnehmen des großen Abschnitts (M2) konfiguriert ist; und eine Trocknungsvorrichtung (31), die stromabwärts der Auswahlvorrichtung (30) und stromaufwärts des zweiten Sammelelements (14a) angeordnet ist, wobei die Trocknungsvorrichtung (31) dazu konfiguriert ist, mindestens den großen Abschnitt (M1) des inkohärenten Materials (M) zumindest teilweise zu trocknen.

2. Rückgewinnungsgerät nach Anspruch 1, **dadurch gekennzeichnet, dass** die Pumpeinheit (12) eine verschleißfreie Pumpe, insbesondere eine peristaltische Pumpe, umfasst.

3. Rückgewinnungsgerät nach einem der vorstehenden Ansprüche, **dadurch gekennzeichnet, dass** die Trennvorrichtung von dem Typ Zyklon ist.

4. Rückgewinnungsgerät nach einem der vorstehenden Ansprüche, **dadurch gekennzeichnet, dass** die Trennvorrichtung (13) auch mit einem Ausgang (21) zum Zurückführen des behandelten, d.h. im Wesentlichen von inkohärentem Material (M) befreiten Prozessfluids (F) bereitgestellt ist, wobei der Rückführungsausgang (21) auf der dem Abführungsausgang (16) gegenüberliegenden Seite und quer in Bezug auf den Eingang (15) bereitgestellt ist.

5. Rückgewinnungsgerät nach Anspruch 4, bei dem die Pumpeinheit (12) mittels einer Saugleitung (17) mit der Sammelzone (11) verbunden ist, in der sich das zu behandelnde Prozessfluid (F1) befindet, **dadurch gekennzeichnet, dass** der Rezirkulationsausgang (21) fluidisch mit einer Rezirkulationsleitung (19) verbunden ist, die in der Lage ist, mindestens einen Teil des behandelten Prozessfluids (F) einer Fluidisierungseinheit (33) zuzuführen, die in der Sammelzone (11) angeordnet und dazu konfiguriert ist, das zu behandelnde Prozessfluid (F1) in Richtung der Saugleitung (17) zu zwingen.

6. Rückgewinnungsgerät nach einem der vorstehenden Ansprüche, **dadurch gekennzeichnet, dass** das erste Sammelelement (14) dazu konfiguriert ist, das restliche Prozessfluid (F) freizugeben, das zusammen mit dem feinen Abschnitt (M1) des inkohärenten Materials (M) ausgetragen wird, und den feinen Abschnitt (M1) darin zurückzuhalten.

7. Rückgewinnungsgerät nach einem der vorstehenden Ansprüche, **dadurch gekennzeichnet, dass** es ein Ablassrohr (20) umfasst, das dem ersten Sammelelement (14) auf der dem Abführungsausgang (16) gegenüberliegenden Seite zugeordnet ist, um das restliche Prozessfluid (F), das durch Schwerkraft durch das erste Sammelelement (14) freigesetzt wird, zu kanalisieren und zurückzugewinnen, wobei das Ablassrohr (20) dazu konfiguriert ist, das abgelassenen restliche Prozessfluid (F) durch das erste Sammelelement (14) in eine Zielzone (25) des Prozessfluids (F) selbst zu transferieren.

8. Rückgewinnungsgerät nach einem der vorstehenden Ansprüche, **dadurch gekennzeichnet, dass** es ein Auslassventil (24) umfasst, das stromabwärts des Abführungsausgangs (16) angeordnet ist, um den Abführungsausgang (16) selektiv zu öffnen, um das rückgewonnene inkohärente Material (M) freizugeben, wobei das Auslassventil (24) ein zeitgesteuertes Auslassventil ist.

9. Rückgewinnungsgerät nach Anspruch 8, **dadurch gekennzeichnet, dass** es eine Steuereinheit (26) umfasst, die dazu konfiguriert ist, das Funktionieren der Trennvorrichtung (13), der Pumpeinheit (12) und des Auslassventils (24) in Abhängigkeit von der Art und den Größen des rückzugewinnenden inkohärenten Materials (M), dem zu erzielenden Rückgewinnungsgrad und der Art des Prozessfluids (F) zu steuern.

10. Schneidemaschine, die einen Strahl von Prozessfluid (F) verwendet, der mit einem Tank (11a) zum Sammeln des zu behandelnden Prozessfluids (F1), der zumindest mit inkohärentem Material (M) vermischtes Prozessfluid (F) enthält, und mit einem Gerät (10) zum Rückgewinnen von inkohärentem Material (M) nach einem der vorstehenden Ansprüche bereitgestellt ist, wobei das Prozessfluid (F) Wasser ist.

11. Verfahren zum Rückgewinnen von inkohärentem Material (M), das in einem zu behandelnden Prozessfluid (F1) vorhanden ist, das Folgendes bereitstellt:
- Entfernen des zu behandelnden Prozessfluids (F1), das zumindest Prozessfluid (F) und das inkohärente Material (M) enthält, aus einer Sammelzone (11);
- Trennen des inkohärenten Materials (M) von dem Prozessfluid (F) selbst in einer Trennvorrichtung (13);
- Rückgewinnen des von der Prozessflüssigkeit (F) getrennten inkohärenten Materials (M);
- Rückgewinnen des von dem inkohärenten Material (M) gereinigten Prozessfluids (F);
- Auswählen, basierend auf der Granulometrie, des rückgewonnenen inkohärenten Materials (M), um mindestens einen großen Abschnitt (M1) und einen feinen Abschnitt (M2) davon zurückzugewinnen;
- zumindest teilweises Trocknen von mindestens einem der ausgewählten Abschnitte (M1, M2) von inkohärentem Material (M).

12. Verfahren nach Anspruch 11, **dadurch gekennzeichnet, dass** die Rückgewinnung von inkohärentem Material (M) das Freigeben und das Sammeln in regelmäßigen Zeitintervallen von mindestens einem Teil des inkohärenten Materials (M), das von dem Prozessfluid (F) abgetrennt und möglicherweise ausgewählt und getrocknet wurde, in mindestens einem Sammelelement (14, 14a) bereitstellt.

13. Verfahren nach Anspruch 11 oder 12, **dadurch gekennzeichnet, dass** es das Dehydrieren des feinen Abschnitts (M1) des inkohärenten Materials (M) bereitstellt, d.h. das Entfernen des restlichen Prozessfluids (F) durch Rückgewinnen und Ansammeln des feinen Abschnitts (M1) des inkohärenten Materials (M) in mindestens einem Sammelelement (14, 14a) mit Abflusseigenschaften.

## Revendications

1. Appareil pour récupérer la matière non cohérente (M) présente dans un fluide de traitement (F) provenant d'opérations industrielles effectuées dans au moins une machine utilisateur, comprenant :
- un dispositif de séparation (13) configuré pour séparer la matière non cohérente (M) du fluide de traitement (F), ledit dispositif de séparation (13) étant pourvu d'au moins une entrée (15) pour le fluide de traitement à traiter (F1) prévue tangente par rapport audit dispositif de séparation (13) et d'au moins une sortie (16) pour évacuer la matière non cohérente (M) prévue le long du développement oblong dudit dispositif de séparation (13) et en aval de ladite entrée (15) ;
- une unité de pompage (12) configurée pour retirer le fluide de traitement à traiter (F1) d'une zone de collecte (11) de ladite machine utilisateur et l'envoyer à ladite entrée (15) du dispositif de séparation (13),
**caractérisé en ce qu'**il comprend : un dispositif de sélection (30) disposé en aval de ladite sortie de décharge (16), ledit dispositif de sélection (30) étant configuré pour sélectionner, sur la base de la granulométrie, au moins une partie fine (M1) et une grande partie (M2) de ladite matière non cohérente (M), au moins un premier élément de collecte (14) configuré pour recevoir ladite partie fine (M1) et un second élément de collecte (14a) configuré pour recevoir ladite grande partie (M2) ; et un dispositif de séchage (31) disposé en aval dudit dispositif de sélection (30) et en amont dudit second élément de collecte (14a), ledit dispositif de séchage (31) étant configuré pour sécher au moins partiellement au moins ladite grande partie (M1) de ladite matière non cohérente (M).

2. Appareil de récupération selon la revendication 1, **caractérisé en ce que** ladite unité de pompage (12) comprend une pompe anti-usure, en particulier une pompe péristaltique.

3. Appareil de récupération selon l'une quelconque des revendications précédentes, **caractérisé en ce que** ledit dispositif de séparation est du type à cyclone.

4. Appareil de récupération selon l'une quelconque des revendications précédentes, **caractérisé en ce que** ledit dispositif de séparation (13) est également pourvu d'une sortie (21) pour faire recirculer le fluide de traitement (F) traité, c'est-à-dire sensiblement exempt de matière non cohérente (M), ladite sortie de recirculation (21) étant prévue sur le côté opposé à ladite sortie de décharge (16) et transversale par rapport à ladite entrée (15).

5. Appareil de récupération selon la revendication 4 et dans lequel ladite unité de pompage (12) est reliée, au moyen d'un tuyau d'aspiration (17), à la zone de collecte (11) où se trouve le fluide de traitement à traiter (F1), **caractérisé en ce que** ladite sortie de recirculation (21) est reliée de manière fluidique à un tuyau de recirculation (19) pouvant fournir au moins une partie dudit fluide de traitement traité (F) à une unité de fluidisation (33) disposée dans ladite zone de collecte (11) et configurée pour forcer ledit fluide de traitement à traiter (F1) vers ledit tuyau d'aspiration (17).

6. Appareil de récupération selon l'une quelconque des revendications précédentes, **caractérisé en ce que** ledit premier élément de collecte (14) est configuré pour libérer le fluide de traitement résiduel (F), déchargé avec ladite partie fine (M1) de la matière non cohérente (M), et retenir ladite partie fine (M1) à l'intérieur de celui-ci.

7. Appareil de récupération selon l'une quelconque des revendications précédentes, **caractérisé en ce qu'**il comprend un tuyau de drainage (20) associé audit premier élément de collecte (14), du côté opposé à la sortie de décharge (16), pour canaliser et récupérer le fluide de traitement résiduel (F) qui est libéré par gravité à travers ledit premier élément de collecte (14), ledit tuyau de drainage (20) étant configuré pour transférer ledit fluide de traitement résiduel drainé (F) à travers ledit premier élément de collecte (14) dans une zone de destination (25) du fluide de traitement (F) lui-même.

8. Appareil de récupération selon l'une quelconque des revendications précédentes, **caractérisé en ce qu'**il comprend une soupape de décharge (24) disposée en aval de ladite sortie de décharge (16) pour ouvrir sélectivement ladite sortie de décharge (16) afin de libérer la matière non cohérente récupérée (M), ladite soupape de décharge (24) étant une soupape de décharge temporisée.

9. Appareil de récupération selon la revendication 8, **caractérisé en ce qu'**il comprend une unité de commande (26) configurée pour gérer le fonctionnement dudit dispositif de séparation (13), de ladite unité de pompage (12) et de ladite soupape de décharge (24) en fonction du type et des tailles de la matière non cohérente (M) à récupérer, du degré de récupération à obtenir et du type de fluide de traitement (F).

10. Machine de découpe utilisant un jet de fluide de traitement (F) doté d'un réservoir (11a) pour collecter le fluide de traitement à traiter (F1) contenant au moins un fluide de traitement (F) mélangé à une matière non cohérente (M), et d'un appareil (10) pour récupérer la matière non cohérente (M) selon l'une quelconque des revendications précédentes, dans laquelle ledit fluide de traitement (F) est de l'eau.

11. Procédé de récupération de matière non cohérente (M) présente dans un fluide de traitement à traiter (F1), qui permet de :
- retirer le fluide de traitement à traiter (F1) contenant au moins le fluide de traitement (F) et ladite matière non cohérente (M) d'une zone de collecte (11) ;
- séparer la matière non cohérente (M) du fluide de traitement (F) lui-même dans un dispositif de séparation (13) ;
- récupérer la matière non cohérente (M) séparée du fluide de traitement (F) ;
- récupérer le fluide de traitement (F) purifié de la matière non cohérente (M) ;
- sélectionner, sur la base de la granulométrie, ladite matière non cohérente récupérée (M) afin de récupérer au moins une grande partie (M1) et une partie fine (M2) de celui-ci ;
- sécher au moins partiellement au moins l'une desdites parties (M1, M2) de matière non cohérente (M) qui ont été sélectionnées.

12. Procédé selon la revendication 11, **caractérisé en ce que** la récupération de la matière non cohérente (M) permet de libérer et de collecter, à intervalles de temps réguliers, au moins une partie de la matière cohérente (M) séparée du fluide de traitement (F), et éventuellement sélectionné et séché, dans au moins un élément de collecte (14, 14a).

13. Procédé selon la revendication 11 ou 12, **caractérisé en ce qu'**il prévoit de déshydrater ladite partie fine (M1) de la matière non cohérente (M), c'est-à-dire d'éliminer le fluide de traitement résiduel (F) en récupérant et en accumulant ladite partie fine (M1) de la matière cohérente (M) dans au moins un élément de collecte (14, 14a) ayant des caractéristiques de drainage.
